# DEMANDE DE BREVET EUROPEEN

(11) **EP 0 812 715 A1**
(43) Date de publication de la demande: **17.12.1997**
(21) Numéro de dépôt: 97109662.3
(22) Date de dépôt: 13.06.1997
(51) Int. Cl.: B60H 1/00, F16B 5/06

(54) **Module de commande et ventilateur centrifuge associé, notamment pour installation de chauffage, ventilation et/ou climatisation de véhicule automobile**

(30) Priorité: 14.06.1996 FR 9607454
(71) Demandeur: VALEO CLIMATISATION, 78321 La Verrière (FR)
(72) Inventeur: Korek, Miroslaw, 78690 Les Essarts Le Roi (FR)
(74) Mandataire: Gamonal, Didier

(57) **Abrégé**

Un module de commande (14') est installé en un endroit choisi (10') dans un boîtier (2') de ventilateur centrifuge (1'). Il comprend un premier moyen de détrompage spécifique (17') situé en une position prédéterminée et susceptible de coopération de forme avec un second moyen de détrompage adapté (18') porté par le boîtier (2') en l'endroit choisi.

## Description

L'invention concerne le domaine des ventilateurs centrifuges, notamment pour installation de chauffage, ventilation et/ou climatisation de véhicule automobile, et plus particulièrement l'installation, à l'intérieur d'un boitier, d'un module de commande d'une telle installation.

Un tel module de commande gère par exemple les variations de vitesse du pulseur du ventilateur, lequel est destiné à pulser de l'air frais, issu de l'extérieur ou de l'intérieur de l'habitacle du véhicule automobile, dans un dispositif de traitement d'air que comprend l'installation. Ce module dégageant de nombreuses calories lorsqu'il est en fonctionnement, il est par conséquent nécessaire de le refroidir, par exemple en utilisant une partie de l'air pulsé.

A chaque type d'installation (par exemple de chauffage et ventilation ou de chauffage, ventilation et climatisation) correspond un type de module de commande, étant donné que les débits d'air requis, et par conséquent les vitesses du pulseur, ne sont pas identiques.

Ces types de modules de commande présentent des fonctionnements différents, mais leurs formes générales sont sensiblement identiques. Par ailleurs, les pulseurs appartenant aux différents types d'installations ne présentent pas des différences importantes, ils peuvent même être identiques.

Or, sur les chaînes de montage actuelles, les ouvriers spécialisés chargés du montage peuvent être amenés, selon les contraintes de production, à effectuer l'assemblage de plusieurs types d'installations successivement ou alternativement. Les types de modules de commande correspondants sont extraits, par l'ouvrier spécialisé (monteur), de caisses de rangement différentes, au fur et à mesure.

Dans le cas particulier d'une chaîne de montage servant au montage de deux types de modules de commande, la probabilité pour qu'un module de commande d'une installation d'un premier type soit installé dans une installation d'un second type n'est pas nulle dans la mesure ou un module de commande d'un deuxième type peut se trouver par erreur dans une caisse supposée ne contenir que des modules de commande d'un premier type, ou bien lorsque le monteur qui vient d'effectuer un grand nombre de montages d'installations d'un premier type, ne s'aperçoit pas que le pulseur qui vient d'arriver correspond au second type et que, par conséquent, le module correspondant doit être pris dans la caisse qui renferme les modules de commande correspondants (du second type).

De telles inversions de montage peuvent entraîner un dysfonctionnement de l'installation concernée, voire même l'empêcher de fonctionner.

Un but de l'invention est donc de procurer un module de commande, ainsi qu'un ventilateur centrifuge adapté, qui ne présente pas les inconvénients des modules de commande et des ventilateurs centrifuges associés de la technique antérieure.

L'invention propose à cet effet un module de commande du type décrit dans l'introduction, dans lequel on prévoit un premier moyen de détrompage spécifique situé en une position prédéterminée et susceptible de coopération de forme avec un second moyen de détrompage adapté porté par le boitier en un endroit choisi pour l'installation dudit module de commande.

De la sorte, la personne (monteur) chargée du montage du module de commande à l'intérieur du boitier du ventilateur centrifuge peut s'apercevoir immédiatement que le module de commande qui vient d'être extrait de l'une des caisses qui l'environnent ne correspond pas au type de boitier qui défile devant elle. Cela interdit désormais les erreurs de montage.

Dans un mode de réalisation préférentiel, le premier moyen de détrompage est un logement, et plus préférentiellement encore un évidement traversant, propre à coopérer avec une saillie homologue formant le second moyen de détrompage.

Ainsi, l'installation du module de commande dans le boîtier ne peut s'effectuer qu'à condition qu'il y ait une coopération parfaite entre la saillie et le logement.

Selon une autre caractéristique de l'invention, le premier moyen de détrompage est réalisé sur une partie sensiblement périphérique du module, en la position prédéterminée. Il est alors possible de réaliser l'évidement sous forme d'encoche, et préférentiellement d'une encoche de forme sensiblement rectangulaire.

L'invention propose également un ventilateur centrifuge comprenant un boitier en forme de volute et muni de moyens propres à immobiliser un module de commande en un endroit choisi à l'intérieur de ladite volute.

Selon l'invention, le boitier comprend, en l'endroit choisi, un second moyen de détrompage adapté, susceptible de coopération de forme avec un premier moyen de détrompage d'un module de commande, ledit module étant à choisir parmi une pluralité de modules de fonctions différentes.

Dans un mode de réalisation préférentiel du boitier selon l'invention, le second moyen de détrompage est logé dans la volute du ventilateur.

Ainsi, le module de commande peut être refroidi directement par le flux d'air pulsé qui circule a l'intérieur de la volute sans qu'il soit nécessaire de prévoir un canal de dérivation.

Préférentiellement, le second moyen de détrompage est une saillie sensiblement homologue a la forme du premier moyen de détrompage, et plus préférentiellement cette saillie est un pion à base sensiblement rectangulaire.

Dans la description qui suit, faite à titre d'exemple, on se réfère aux dessins annexés, sur lesquels :
- la figure 1 est une vue en coupe transversale d'un ventilateur centrifuge équipé d'un module de commande selon l'invention; dans une première forme de réalisation;
- la figure 2 illustre de façon schématique un module de commande de l'art antérieur;
- la figure 3 illustre de façon schématique, en vue du dessus, un module de commande selon l'invention, dans une première forme de réalisation adaptée au ventilateur de la figure 1;
- la figure 4 est une vue en coupe transversale d'un ventilateur centrifuge équipé d'un module de commande selon l'invention, dans une seconde forme de réalisation; et
- la figure 5 illustre de façon schématique le module de commande de la figure 4 dans une vue du dessus.

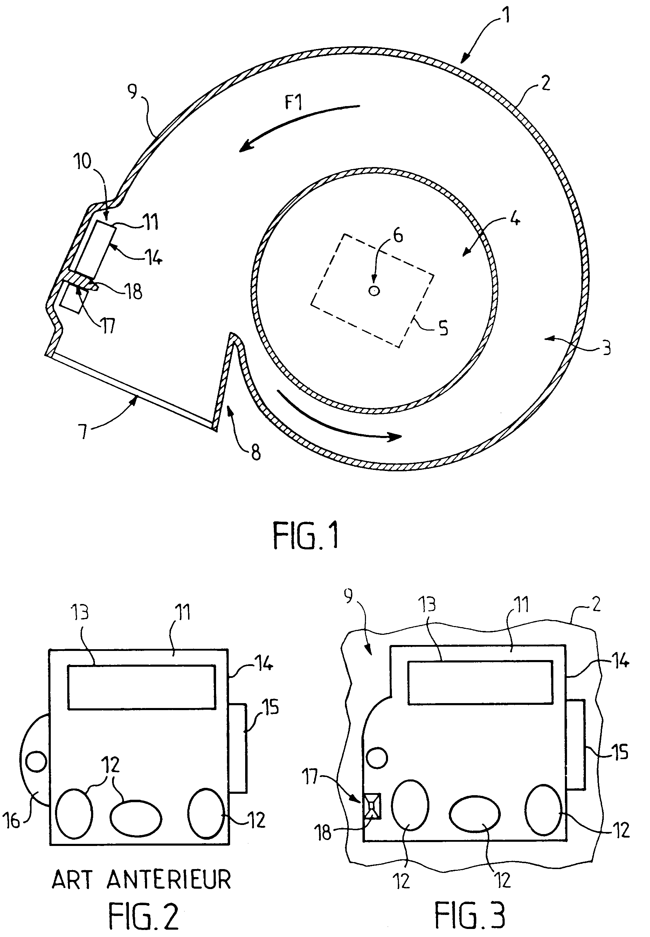

Le ventilateur centrifuge 1 illustré à la figure 1 appartient, par exemple, à une installation de chauffage, ventilation et climatisation de l'habitacle.

Il comprend notamment un boitier 2 comportant une partie 3 en forme de volute spiralée de section croissante, a l'intérieur de laquelle est logée une turbine 4 qui peut tourner autour d'un axe de révolution 6 sous l'action d'un moteur électrique 5 (représenté en trait discontinu).

L'air qui provient de l'extérieur et/ou de l'intérieur de l'habitacle du véhicule est aspiré axialement par la turbine (ou pulseur) 4, puis mis en mouvement rotatoire par effet centrifuge, et enfin pénètre dans la volute 3 dans laquelle il circule jusqu'à une sortie 7 qui se trouve à l'extrémité d'une partie d'extrémité 8 de la volute 3, localement rectiligne.

Ce ventilateur alimente en air frais pulsé un dispositif de traitement d'air destiné à alimenter en air traité l'habitacle du véhicule dans lequel il est implanté.

Le boitier 2 comprend une paroi externe 9 qui présente, par exemple dans la partie terminale 8, une partie conformée formant logement 10 destiné à recevoir au moins partiellement un module de commande 14 du moteur électrique 5.

Sur la figure 2 se trouve illustré schématiquement un module de commande 14 de l'art antérieur. Un tel module comprend généralement une plaque de base 11 sur laquelle se trouvent implantés un certain nombre de composants électriques et/ou électroniques, comme par exemple des résistances de puissance 12. La plaque de base peut également comprendre, par exemple, un radiateur de refroidissement 13.

Les composants électriques et électroniques du type résistances de puissance 12 sont adaptés pour faire varier la vitesse de rotation du pulseur 6, et par conséquent le débit de l'air frais pulsé dans la volute 3.

Le module de commande 14 est relié au moteur 5 par l'intermédiaire d'un connecteur 15 destiné à être emboîté dans un connecteur mâle ou femelle prévu à cet effet dans la paroi 9 du boîtier 2 (non représenté sur les figures).

Dans les ventilateurs centrifuges de l'art antérieur, le module de commande 14 est immobilisé à l'intérieur du logement 10 par l'intermédiaire de son connecteur 15, et éventuellement, par des moyens de fixation destinés à coopérer avec une patte de fixation 16 prévue sur la périphérie de la plaque de base 11.

Actuellement, les modules de commande 14 destinés à commander le moteur électrique 5 d'une installation de chauffage, ventilation et climatisation, ou bien d'une installation de chauffage et ventilation, présentent des formes sensiblement identiques malgré leurs fonctions différentes. De plus, dans un cas comme dans l'autre, leurs connecteurs 15 respectifs, et les connecteurs associés logés dans la paroi 9 du boîtier 2, sont respectivement identiques.

En conséquence, il est très facile d'installer un module de commande pour installation de chauffage et ventilation, dans un boîtier de ventilateur centrifuge destiné à alimenter en air frais une installation de chauffage, ventilation et climatisation. L'inverse est tout aussi probable.

C'est pourquoi, selon l'invention, on prévoit des moyens de détrompage afin d'interdire toute erreur d'implantation du type décrit ci-avant.

Ces moyens de détrompage sont réalisés en deux parties sensiblement homologues et susceptibles de coopération de forme l'une avec l'autre.

Une première partie est réalisée sous la forme d'un logement 17 à la périphérie de la plaque de base 11.

Préférentiellement, ce logement 17 est un évidement traversant (comme illustré sur la figure 1). Plus préférentiellement encore, cet évidement 17 est une encoche de forme sensiblement rectangulaire.

Cette encoche 17 est réalisée en une position prédéterminée de la plaque de base 11 afin de coopérer avec la seconde partie des moyens de détrompage, laquelle est préférentiellement réalisée sous la forme d'une saillie 18 portée par la paroi externe 9 du boîtier 2 au niveau du logement 10.

Préférentiellement, cette saillie 18 est réalisée sous la forme d'un pion faisant partie intégrante de la paroi 9. Il peut être réalisé, par exemple par moulage lors de la réalisation du boitier.

Ce pion 18 présente une forme sensiblement homologue à celle du logement 17, et par conséquent dans le mode de réalisation illustré sur les figures 1 et 3, le pion 18 présente une base sensiblement rectangulaire et une extrémité de forme pyramidale. Bien entendu, en variante, il pourrait présenter une base circulaire et une extrémité conique.

Dans l'exemple illustré sur les figures 1 et 3, l'encoche 17 est réalisée dans un prolongement inférieur de la patte de fixation 16 qui fait partie intégrante de la plaque de base 11. Le pion 18 est réalisé dans le logement 10 de la paroi externe 9 du boîtier 2 dans une position particulière qui ne permet qu'une position d'installation, et une seule, du module de commande 14 dans le logement 10. Cela veut dire que, pour connecter le module de commande 14 au connecteur prévu dans la paroi du boîtier 2, il faut obligatoirement que le pion 18 soit logé dans l'encoche 17. Si tel n'est pas le cas, cela indique au monteur, que le module de commande n'est pas destiné au ventilateur centrifuge 1 qu'il est en train de monter.

Le monteur sait donc instantanément s'il s'est trompé, ou bien s'il effectue une opération de montage correcte, et standard, sans qu'il soit nécessaire de lui signaler.

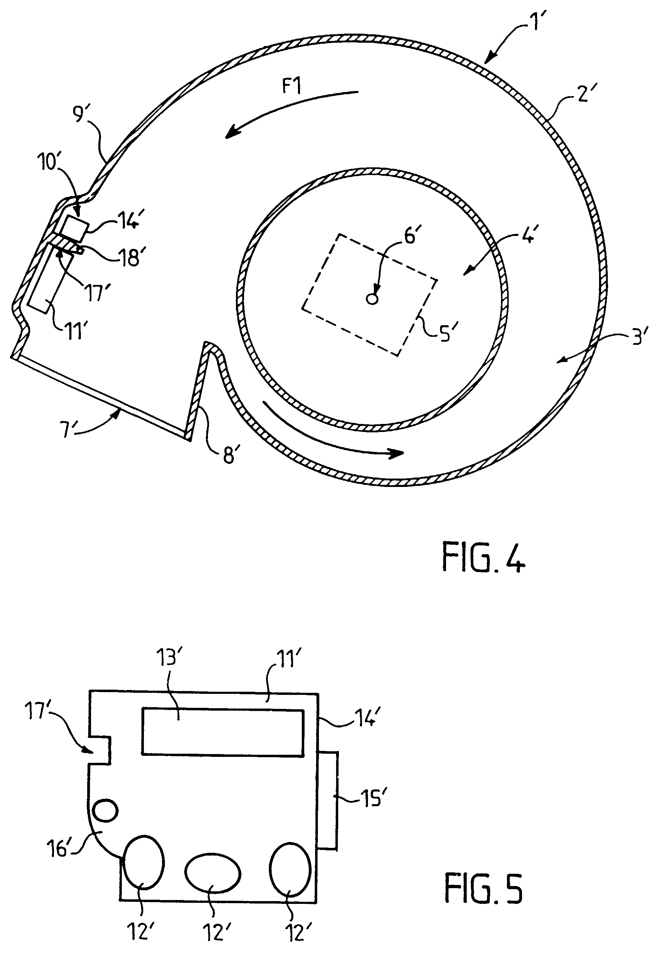

On se réfère maintenant aux figures 4 et 5 pour décrire une seconde forme de réalisation d'un module de commande et d'un ventilateur centrifuge associé, selon l'invention.

Dans cette seconde forme de réalisation, le ventilateur centrifuge 1 et le module de commande associé sont sensiblement identiques en apparence à ceux décrits précédemment en référence aux figures 1 et 3. Par conséquent, ils portent les mêmes références accompagné de la marque " ' ". Seuls les emplacements des moyens de détrompage 17' et 18' sont différents.

Un tel ventilateur centrifuge 1' est par exemple destiné à alimenter en air frais pulsé une installation de chauffage et ventilation, et non plus, comme dans l'exemple précédemment décrit (voir figures 1 et 3), une installation de chauffage, ventilation et climatisation.

La différence de positionnement des moyens de détrompage 17' et 18' permet ainsi de différencier sans ambiguïté d'une part le ventilateur centrifuge destiné à l'installation de chauffage et ventilation, et le moyen de commande 14' associé à un tel ventilateur centrifuge 1'.

Dans le mode de réalisation illustré sur les figures 4 et 5, l'encoche 17' est réalisée dans un prolongement supérieur de la patte de fixation 16', contrairement au mode de réalisation précédent dans lequel l'encoche 17 était réalisée dans la partie inférieure de la patte de fixation 16. De même, le pion 18' n'est plus réalisé au même endroit que dans l'exemple décrit précédemment, il se trouve légèrement translaté par rapport à la position précédente, à l'intérieur du logement 10'. En fait, la translation est égale à celle subie par l'encoche 17' relativement à la position de l'encoche 17.

L'invention ne se limite pas aux deux formes de réalisation décrites ci-avant, mais elle embrasse toutes les variantes que pourra développer l'homme de l'art dans le cadre des revendications ci-après.

Ainsi, les moyens de détrompage pourront être notablement différents de ceux décrits dans les deux formes de réalisation précédentes, pourvu qu'ils permettent la coopération entre un pulseur d'un premier type et le module de commande associé, et non pas la coopération entre un ventilateur d'un premier type et un module de commande destiné à faire fonctionner un ventilateur centrifuge d'un second type.

De même, les emplacements respectifs des moyens de détrompage pourront être différents de ceux décrits précédemment.

Enfin, on a décrit des ventilateurs centrifuges dans lesquels les modules de commande étaient logés à l'intérieur de la volute principale, mais l'invention s'applique tout aussi bien à d'autres formes de ventilateurs centrifuges dans lesquels le module de commande est installé à l'intérieur d'un canal auxiliaire, et non plus dans la volute principale.

## Revendications

1. Module de commande, propre à être installé en un endroit choisi (10;10') dans un boîtier (2;2') de ventilateur centrifuge (1;1') choisi parmi une pluralité de boîtiers différents, caractérisé en ce qu'il comprend un premier moyen de détrompage spécifique (17;17') situé en une position prédéterminée et susceptible de coopération de forme avec un second moyen de détrompage adapté (18;18') porté par le boîtier (2;2') en l'endroit choisi.

2. Module de commande selon la revendication 1, caractérisé en ce que le premier moyen de détrompage (17;17') est un logement propre à coopérer avec une saillie (18;18') homologue formant le second moyen de détrompage.

3. Module de commande selon la revendication 2, caractérisé en ce que le logement (17;17') est un évidement traversant.

4. Module de commande selon l'une des revendications 1 à 3, caractérisé en ce que le premier moyen de détrompage (17;17') est réalisé sur une partie (16;16') sensiblement périphérique dudit module (14;14'), en la position prédéterminée.

5. Module de commande selon les revendications 3 et 4 en combinaison, caractérisé en ce que l'évidement (17;17') est une encoche.

6. Module de commande selon la revendication 5, caractérisé en ce que l'encoche (17;17') est de forme sensiblement rectangulaire.

7. Ventilateur centrifuge, du type comprenant un boîtier (2;2') en forme de volute (3;3') et muni de moyens propres à immobiliser un module de commande (14;14') en un endroit choisi (10;10') à l'intérieur de ladite volute, caractérisé en ce que le boîtier (2;2') comprend, en l'endroit choisi (10;10'), un second moyen de détrompage adapté (18;18'), susceptible de coopération de forme avec un premier moyen de détrompage (17;17') d'un module de commande (14;14') selon l'une des revendications 1 à 6, ledit module étant à choisir parmi une pluralité de modules de fonctions différentes.

8. Ventilateur centrifuge selon la revendication 7, caractérisé en ce que le second moyen de détrompage (18;18') est logé dans la volute (3;3').

9. Ventilateur centrifuge selon l'une des revendications 7 et 8, caractérisé en ce que le second moyen de détrompage (18;18') est une saillie de forme sensiblement homologue à la forme du premier moyen de détrompage (17;17').

10. Ventilateur centrifuge selon la revendication 9, caractérisé en ce que la saillie (17;17') est un pion à base sensiblement rectangulaire.
